# EUROPÄISCHE PATENTANMELDUNG

(11) **EP 0 696 829 A1**
(43) Veröffentlichungstag der Anmeldung: **14.02.1996**
(21) Anmeldenummer: 95111377.8
(22) Anmeldetag: 20.07.1995
(51) Int. Cl.: H02H 3/00

(54) **Elektronisches Überwachungssystem für Niederspannungsschaltgeräte und/oder -anlagen**

(30) Priorität: 08.08.1994 DE 4428007
(71) Anmelder: Jean Müller GmbH Elektrotechnische Fabrik, D-65343 Eltville (DE)
(72) Erfinder:
(74) Vertreter: Quermann, Helmut, Dipl.-Ing.

(57) **Zusammenfassung**

Die Erfindung schlägt ein elektronisches Überwachungssystem für Niederspannungsschaltgeräte und/oder -anlagen vor, mit einer Grundschaltung für alle Gerätefunktionen, wobei mit der Grundschaltung die elektrischen Größen Spannung, Strom, Frequenz, Phasenlage und Phasenfolge und aus diesen mittels der Grundschaltung systemspezifische Überwachungsparameter ermittelt werden.

## Beschreibung

Die Erfindung bezieht sich auf ein elektronisches Überwachungssystem für Niederspannungsschaltgeräte und/oder Niederspannungsschaltanlagen.

Es ist Aufgabe der vorliegenden Erfindung, ein elektronisches Überwachungssystem für Niederspannungsschaltgeräte und/oder -anlagen zu schaffen, welches eine universelle Überwachung der Schaltgeräte bzw. Anlagen hinsichtlich ihrer zulässigen Betriebsgrößen ermöglicht.

Die Erfindung schlägt hierfür ein elektronisches Überwachungssystem für Niederspannungsschaltgeräte und/oder -anlagen vor, mit einer Grundschaltung für alle Gerätefunktionen, wobei mit der Grundschaltung die elektrischen Größen Spannung, Strom, Frequenz, Phasenlage und Phasenfolge (Drehsinn) und aus diesen mittels der Grundschaltung systemspezifische Überwachungsparameter ermittelt werden.

Die Erfindung stellt eine Reihe von unterschiedlichen Überwachungs- und gegebenenfalls Meldefunktionalitäten zur Verfügung. Wesentlich ist hierbei, daß nur eine Grundschaltung für alle Funktionen zugrundegelegt wird.

Durch eine entsprechende logische Auswertung der elektrischen Größen Spannung, Frequenz, Phasenlage und Phasenfolge mittels eines in die Grundschaltung integrierten Microcontrollers mit Betriebssoftware ergeben sich folgende Überwachungsmöglichkeiten: Sicherungsüberwachung, Spannungsüberwachung hinsichtlich Unter-/Überspannung, Phasenausfallüberwachung, Drehsinnerkennung, Frequenzüberwachung, insbesondere hinsichtlich des Größenbereiches 50 Hz/60 Hz, Phasenfolgeüberwachung und Restspannungsindikator.

Durch Anschaltung zusätzlicher Stromwandler über Analog-Eingänge ist es möglich, die Ströme der drei Phasen zu erfassen. Da die Messung zu der vorhandenen Spannungsmessung phasenkorreliert erfolgt, ist es möglich, Spannungen und Ströme hinsichtlich ihrer Phasenlage zueinander zu erfassen. Die Auswertung dieser Meßwerte erlaubt mit Hilfe der Software die Berechnung weiterer, interessierender Größen, nämlich die des Wirkstromes, der Wirkleistung, des Blindstromes, der Blindleistung und des cos φ.

Die Grundschaltung (Hardware/Software) ist schaltungstechnisch bevorzugt so ausgelegt, daß eine Vernetzung, das heißt eine Datenkommunikation aller Funktionen als Einzelgerät oder als Kombinationsgerät mit Anzeige realisiert werden kann. Die in der Erfassungsgrundschaltung ermittelten Daten können von einem separaten Gerät ausgewertet und aufgezeichnet bzw. weitergegeben werden.

Die Grundschaltung ist so konzipiert, daß sie sich aus möglichst wenigen Einzelteilen zusammensetzt und die jeweiligen Überwachungsfunktionen durch eine Betriebssoftware realisiert werden.

Der Aufbau und die Funktion eines Ausführungsbeispieles des erfindungsgemäßen elektronischen Überwachungssystems ist anhand der beigefügten Unterlagen:

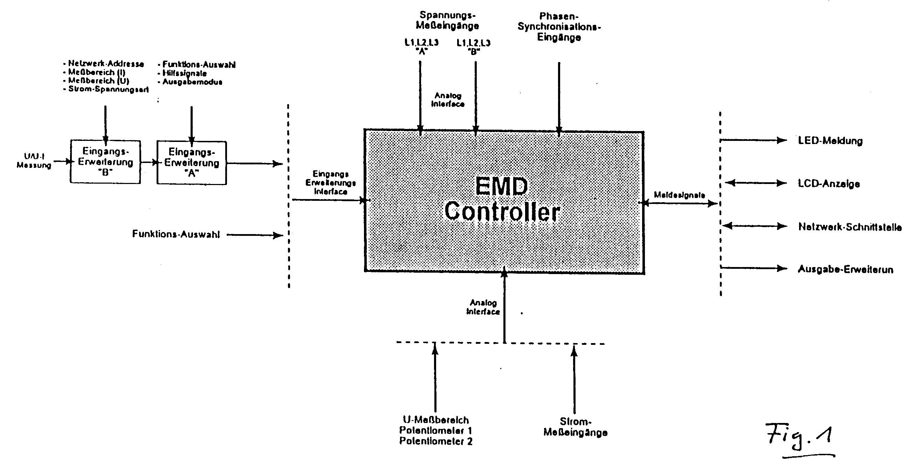

- Figur 1: Aufbau des elektronischen Überwachungssystems,

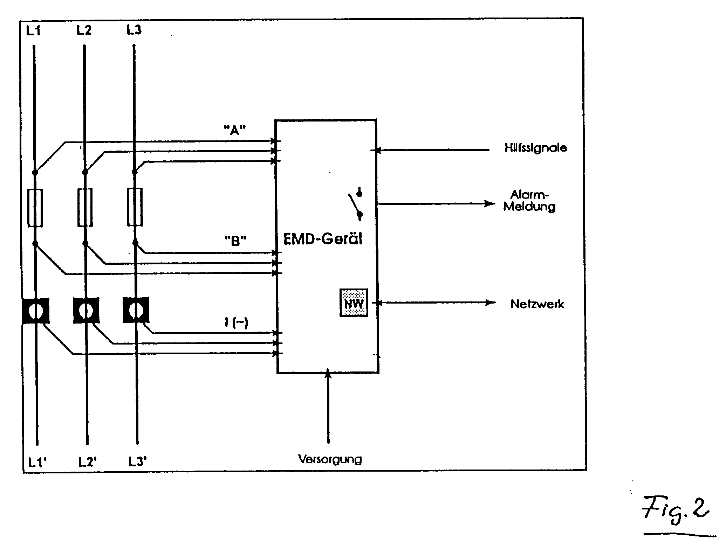

- Figur 2: Anschlußkonfiguration des elektronischen Überwachungssystems,

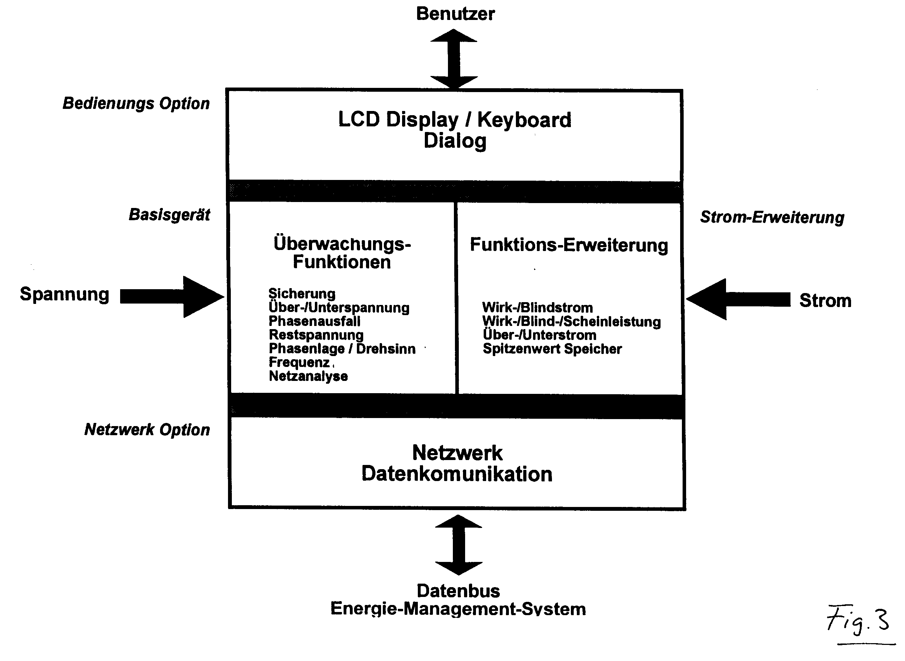

- Figur 3: Übersicht der Funktionsblöcke,
sowie der nachfolgenden Funktionsbeschreibung beschrieben.

### Aufbau

1. Die MCU (Microcontroller-Unit) verfügt über eine Vielzahl von Eingangs- bzw. Ausgangssignalen, beispielsweise 20, die verschiedene programmierbare Charakteristiken aufweisen können. Die MCU verfügt über einen Programmspeicher, beispielsweise einen 4kB Programmspeicher, in dem die Betriebssoftware untergebracht ist.
2. Die Funktionalität der Funktionen des elektronischen Überwachungssystems wird durch eine Software realisiert. Auf diese Weise ist es möglich, auf spezielle Anforderungen nur durch Modifikation der Software zu reagieren. Eine hardwaremäßige Schaltungsänderung ist damit nicht nötig. Das Betriebsprogramm wird in die MCU einprogrammiert.
3. Ausgabenmodalitäten
   Ein erster Ausgabemodus bezieht sich beispielsweise auf eine LED-Darstellung. Es werden drei Leuchtdioden LED's zur individuellen Störungsanzeige benutzt. Je nach Betriebsart und Gerät kommen den LED's unterschiedliche Bedeutungen zu. Die LED's 1-3 können zu weitergehenden Meldungen Relais parallel geschaltet werden.
4. Ein zweiter Ausgabemodus beinhaltet beispielsweise eine LCD-Display-Schnittstelle. Die Controllersignale werden als Datenschnittstelle zu einem LCD-Display benutzt. Auf diese Weise ist es möglich, alle ermittelten Meßwerte und Zustände an eine Anzeigeeinheit zu übertragen und dort in geeigneter Form aufbereitet darzustellen.
5. Ein dritter Ausgabemodus bezieht sich beispielsweise auf einen Netzwerkanschluß. Wird die erfindungsgemäße Schaltung in einem Netzwerk zur Datenerfassung an einem Feldbus betrieben, werden die Controllersignale benutzt, um ein Netzwerk-Interface (Feldbus-Schnittstelle) anzusteuern.Auf diese Art und Weise können eine Vielzahl von Gerätegruppen miteinander verschaltet werden.

## Patentansprüche

1. Elektronisches Überwachungssystem für Niederspannungsschaltgeräte und/oder -anlagen, mit einer Grundschaltung für alle Gerätefunktionen, wobei mit der Grundschaltung die elektrischen Größen Spannung, Strom, Frequenz, Phasenlage und Phasenfolge und aus diesen mittels der Grundschaltung systemspezifische Überwachungsparameter ermittelt werden.

2. Überwachungssystem nach Anspruch 1, **dadurch gekennzeichnet**, daß die Überwachungsparameter sich auf die Überwachung an einem Niederspannungsnetz und/oder der Spannung hinsichtlich Unter-/Überspannung und/oder des Phasenausfalls und/oder der Frequenz und/oder der Phasenfolge und/oder Drehsinnerkennung und/oder eine Anzeige einer Restspannung beziehen.

3. Überwachungssystem nach Anspruch 1 oder 2, **dadurch gekennzeichnet**, daß über Analog-Eingänge die Anschaltung von Stromwandlern erfolgt, wobei die Überwachungsparameter sich auf die Überwachung des Wirkstromes und/oder der Wirkleistung und/oder des Blindstromes und/oder der Blindleistung und/oder cos φ beziehen.

4. Überwachungssystem nach einem der Ansprüche 1 bis 3, **dadurch gekennzeichnet**, daß die mit der Grundschaltung ermittelten Überwachungsparameter mittels eines separaten Erfassungsgerätes ausgewertet und/oder aufgezeichnet und/oder weitergegeben werden.
